# EUROPÄISCHE PATENTSCHRIFT

(11) **EP 1 756 515 B1**
(45) Veröffentlichungstag und Bekanntmachung des Hinweises auf die Patenterteilung: **25.02.2009**
(21) Anmeldenummer: 05749955.0
(22) Anmeldetag: 03.05.2005
(51) Int. Cl.: G01C 15/02, B25H 7/04

(54) **MARKIERUNGSGERÄT**
MARKING APPLIANCE
APPAREIL DE MARQUAGE

(30) Priorität: 05.06.2004 DE 102004027646
(43) Veröffentlichungstag der Anmeldung: 28.02.2007
(73) Patentinhaber: ROBERT BOSCH GMBH, 70442 Stuttgart (DE)
(72) Erfinder: HOFFMANN, Erhard, 70771 Leinfelden-Echterdingen (DE); CLAUSS, Stefan, 70771 Leinfelden-Echterdingen (DE); HECHT, Joachim, 71106 Magstadt (DE); HEINE, Christian, 72622 Nuertigen (DE); KRAPF, Reiner, 72770 Reutlingen (DE); BERGMANN, Julian, 70178 Stuttgart (DE)
(86) Internationale Anmeldenummer: PCT/EP2005/052015
(87) Internationale Veröffentlichungsnummer: WO 2005/121703

(56) Entgegenhaltungen:
- DE-A1- 10 205 000
- DE-A1- 19 709 146

## Beschreibung

Die Erfindung geht aus von einem Markierungsgerät nach dem Oberbegriff des Anspruchs 1.

### Stand der Technik

Geräte zur Positionierung von Markierungen bzw. zur Nivellierung von Markierungen, ausgehend von einer ersten Referenzmarkierung sind vor allem im Baulaserbereich verbreitet. So besteht beispielsweise eine typische Aufgabe darin, zwei Bohrlöcher in einem vorgegebenen Abstand auf einem vorgegebenen Niveau zu erzeugen. Nimmt man an, dass eine erste Markierung einem späteren, ersten Bohrloch entspricht, so ist es für viele Anwender hilfreich zu wissen, wo genau sie das zweite Bohrloch anzusetzen und zu bohren haben. Dazu gehört nach der Markierung bzw. Bohrung des ersten Loches die Bestimmung des Abstands und der Lage des zweiten bzw. aller weiteren Bohrlöcher.

Marktüblich sind Baulaser, die in verschiedenen Varianten erhältlich sind. So gibt es beispielsweise Rotationslaser, die durch einen rotierenden, sichtbaren Laserstrahl eine Ebene im Raum aufspannen. Dabei sind Geräte mit manueller Nivellierung, beispielsweise über Stellschrauben oder Libellen, teilautomatischer oder auch vollautomatischer Nivellierung erhältlich. Aufgrund dieser Nivellierung ist es mit den entsprechenden Geräten möglich, eine exakt horizontale oder vertikale Ausrichtung des Lichtsignals zu erzeugen.

Weiterhin gibt es sogenannte Linienlaser, die einen in einer Ebene deutlich divergierenden Laserstrahl verwenden, der, wenn er die Ebene einer Referenzfläche schneidet, eine Linie auf dieser Referenzfläche, beispielsweise einer Wand, eines Bodens oder Decken projiziert, ohne dass eine Rotation des Lasersignals notwendig ist.

Des weiteren sind einfache Laser mit Nivelliermöglichkeiten, wie beispielsweise Wasserwagen mit eingebauter Laserfunktion bekannt, die, wie die bereits beschriebenen Geräte, entweder direkt auf einen Baugrund aufgebracht werden können, oder auf drehbaren Hilfshalterungen und/oder auf Stativen befestigt werden können.

Bekannt sind auch Linienlaser, die sich mit Hilfe eines Hilfsmittels, wie beispielsweise eines Nagels, einer Schraube oder eines Bohrlocheinsatzes an einer Wand befestigen lassen und dort entweder manuell über eine eingebaute Libelle nivellieren lassen oder nach Art eines Laserpendels selbstnivellierend sind. Solche Geräte ermöglichen es, einen Laserstrahl in der zuvor einnivellierten Ebene beispielsweise auf eine Wand zu projizieren um entsprechende Markierungen positionieren zu können.

Aus der EP 1367364 A2 ist ein Laserstrahlnivelliergerät bekannt, das mit seinem Gehäuse an einer Referenzfläche angeordnet werden kann, wobei in dem Gehäuse ein Pendel angeordnet ist, das schwenkbar mit dem Gehäuse gekoppelt ist und zumindest eine Lichtquelle trägt. Das der Gravitation unterliegende Pendel richtet die zumindest eine Lichtquelle waagerecht aus, so dass ein von der Lichtquelle ausgesendetes Lichtsignal eine exakt waagerecht verlaufende Linie erzeugt. Dokument DE 19709144 offenbart ein Markierungsgerät mit den Merkmalen des Oberbegriffs des Anspruchs 1.

### Vorteile der Erfindung

Das erfindungsgemäße Markierungsgerät, welches vorteilhafterweise als ein handgehaltenes Markierungswerkzeug zur Positionierung von Markierungen auf Oberflächen, wie beispielsweise Wänden, Decken oder Böden ausgebildet ist, verfügt über Mittel, die es ermöglichen, das Gerät an einer vorgebbaren, ersten Position einer solchen Referenzfläche anzuordnen. Diese Mittel können beispielsweise als Befestigungsmittel in Form von Krallen, Stiften, Klammem, Klemmen, Nägeln, Schrauben, Klebstoff oder anderen bekannten Befestigungsarten ausgebildet sein, mit denen das Gerät beispielsweise in einem Bohrloch befestigt werden kann. Darüber hinaus verfügt, das erfindungsgemäße Messgerät über Mittel, mit denen es exakt über einer vorgebbaren, ersten Position einer Referenzfläche zu positionieren ist. Dies kann beispielsweise ein Lichtzeiger sein, der die genaue Anordnung des Markierungsgerätes über einer Referenzposition gewährleistet. Des weiteren verfügt das erfindungsgemäße Markierungsgerät über Mittel zur Nivellierung des Gerätes relativ zu der Referenzfläche, auf der es aufgebracht ist. Das Gerät besitzt ein Wegnehmersystem, mit dem es möglich ist, eine vom Gerät in Bezug auf die erste Position des Gerätes zurückgelegte Strecke zu detektieren und quantitativ zu bestimmen.

In vorteilhafter Weise detektiert das Wegnehmersystem die Bewegung des Messgerätes auf der Referenzfläche in zwei zueinander orthogonalen Richtungen. Durch die Detektion des Verfahrweges und die Kenntnis des Abstandswertes von der erste vorgebbaren Position in den beiden orthogonalen Richtungen ist es mit dem erfindungsgemäßen Markierungsgerät möglich, relativ zu einer ersten Referenzmarkierung eine zweite, beziehungsweise weitere Markierungen anzubringen, die exakt horizontal, vertikal oder auch diagonal im definierten Abstand zur Referenzmarkierung liegen. Ausgehend von einer ersten Referenzmarkierung, beispielsweise einem ersten Bohrloch, kann der Anwender mit dem erfindungsgemäßen Markierungsgerät schnell und exakt weitere Markierungen, beispielsweise für weitere Bohrungen in definiertem Abstand und definierter Lage anbringen, ohne dass eine zweite Person zu Hilfe gezogen werden muss.

Mit den in den abhängigen Ansprüchen aufgeführten Merkmalen sind vorteilhafte Weiterbildungen des erfindungsgemäßen Markierungsgerätes möglich.

In einer vorteilhaften Ausführungsform des erfindungsgemäßen Markierungsgerätes wird das Wegnehmersystem zur Bestimmung der in Bezug auf eine erste Position des Gerätes von dem Gerät auf der Referenzfläche zurückgelegten Strecke als mechanisches Messsystem ausgebildet. Dabei kann die Bewegung von einer beziehungsweise mehreren Kugeln, mit denen das Gerät über die Referenzfläche verfahren wird, insbesondere in zwei orthogonalen Richtungen mechanisch abgefragt werden, so dass die vom Gerät zurückgelegte Strecke einer Auswerteeinheit des Messgerätes zur Verfügung gestellt werden kann.

In einer alternativen Ausführungsform des erfindungsgemäßen Markierungsgerätes kann ein optomechanisches Messsystem zur Aufnahme der Weginformation genutzt werden. Dabei kann beispielsweise die Bewegung einer oder mehrerer Kugeln, mit denen das Messgerät über die Referenzfläche verfahren wird, auf eine Mehrzahl von Lichtschranken übertragen werden, die beispielsweise über die Anzahl der Lichtunterbrechungen ein Maß für die zurückgelegten Strecken liefern können.

In vorteilhafter Weise verfügt das Wegnehmersystem der erfindungsgemäßen Vorrichtung über zumindest eine, über die Referenzfläche abrollbare Kugel, welche die Weginformation aufnimmt In einer besonders vorteilhaften Ausführungsform besitzt das erfindungsgemäße Messgerät drei Kugelkörper zum Verfahren über die Referenzfläche, um eine sichere Bewegung ohne ein Verkippen des Messgerätes auf der Referenzfläche zu ermöglichen. Dabei können eine einzelne, zwei oder auch alle Kugeln abgetastet werden, wobei einerseits mit der Anzahl der Abtastungssensoren, die Komplexität des Messgerätes zunimmt, jedoch anderseits auch die Abstandsmessung, insbesondere im Falle rauher und unregelmäßiger Referenzflächen, genauer durchgeführt werden kann. Die Abtastung der Bewegung der mindestens einen Kugel erfolgt beispielsweise in mechanischer, opto-mechanischer oder auch rein optischer Weise. Im Fall der reinen optischen Wegaufnahme kann auf die Verwendung von Kugeln als Verfahrhilfe verrichtet werden. In einer solchen Ausführungsform des erfindungsgemäßen Messgerätes können andere Hilfsmittel, wie beispielsweise Filzgleiter oder einfach nur der Gehäuseboden des Gerätes zum Verfahren des Messgerätes über der Referenzfläche verwendet werden.

Das erfindungsgemäße Markierungsgerät verfügt über Anzeigemittel, die es gestatten, den aktuellen Abstandswert des Gerätes von einer ersten, vorgebbaren Position zumindest in einer der orthogonalen Richtungen wiederzugeben. In einer vorteilhaften Ausführungsform des erfindungsgemäßen Markierungsgerätes wird über eine Ausgabeeinheit der aktuelle Abstand des Gerätes von der vorgebbaren ersten Position in den beiden orthogonalen Richtungen angezeigt. Auf diese Weise kann ein Anwender leicht überprüfen, ob er sich beispielsweise in exakt der gleichen Höhe der ersten Position befindet.

In einer Ausführungsform des erfindungsgemäßen Markierungsgerätes kann vorgesehen sein, lediglich den Abstandswert in einer orthogonalen Richtung über eine Ausgabeeinheit des Messgerätes quantitativ anzugeben, und über optische beziehungsweise akustische Mittel ein Abweichen in der zweiten orthogonalen Richtung relativ zu der ersten vorgebbaren Position dem Nutzer mitzuteilen.

In vorteilhafter Weise weist das erfindungsgemäße Markierungsgerät optische Signalmittel zur Erzeugung mindestens einer Richtungsinformation auf. Diese optischen Signalmittel können beispielsweise durch eine oder mehrere Lichtquellen, insbesondere Laser, beispielsweise in Form von Halbleiter-Laserdioden ausgebildet sein. In vorteilhafter Weise lassen sich die Signalmittel einzeln schalten und treten beispielsweise an zwei gegenüberliegenden Seiten des Messgerätes aus dem Gehäuse des Gerätes aus, wobei die Lichtsignale vorzugsweise in einer Ebene liegen.

Das erfindungsgemäße Messgerät verfügt über Mittel, die es ermöglichen, die optischen Signalmittel zur Erzeugung der Richtungsinformation relativ zur Referenzfläche zu nivellieren. Dabei können beispielsweise mechanische Nivelliermittel, wie zum Beispiel eine einzelne beziehungsweise eine Mehrzahl von Libellen zur Justage des Markierungsgerätes auf der Referenzfläche genutzt werden.

In einer besonders vorteilhaften Ausführungsform des erfindungsgemäßen Markierungsgerätes sind die optischen Signalmittel selbstnivellierend. Auf diese Weise ist sichergestellt, dass das aus dem Messgerät austretende Lichtsignal automatisch nivelliert ist, so dass eine Fehlnutzung des Messgerätes verhindert wird. So können die optischen Signalmittel beispielsweise in Art eines Pendellasers mit einer oder mehrerer Laserdioden in Gehäuse des Messgerätes angeordnet sein.

Das erfindungsgemäße Markierungsgerät verfügt zudem über Markierungsmittel, die es ermöglichen, eine zweite Position auf der Referenzfläche zu markieren, die dem ermittelten Abstand zu der vorgebbaren, ersten Position entspricht. Diese Mariderungseinrichtung kann beispielsweise als integrierter Stempel oder integrierter Tintenspritzer, der auf mechanischem, elektronischem, thermischem, pneumatischem oder piezokeramischem Wege, analog einem Tintenstrahldrucker eine entsprechende Markierung in Form eines Tintenkleckses auf die gewünschte Position aufbringen kann, ausgebildet sein. Des weiteren kann vorgesehen sein, dass das erfindungsgemäße Markierungsgerät eine integrierte hoffnung aufweist, die als Markierungsmittel dient und durch die hindurch eine Markierung, beispielsweise durch Anzeichnen oder Anreißen mit einem Stift, auf die Referenzfläche aufgebracht werden kann. Diese Markierungsmittel können in vorteilhafter Weise vom restlichen Gerät entkoppelt sein, so dass hier ebenfalls eine selbstnivellierende Anordnung, analog eines sich selbst ausrichtenden Pendels vorhanden ist, so dass eine manuelle Einstellung mittels einer oder mehrerer Libellen durch den Nutzer entfällt.

Das erfindungsgemäße Markierungsgerät ermöglicht es in einfacher und zuverlässiger Weise, relativ zu einer ersten vorgebbaren Referenzmarkierung eine zweite Markierung auf einer Referenzfläche anzubringen, wobei diese zweite Markierung exakt horizontal, vertikal oder auch diagonal in definiertem Abstand zur ersten Referenzmarkierung liegt.

Weitere Vorteile des erfindungsgemäßen Gerätes ergeben sich aus der nachfolgenden Beschreibung eines Ausführungsbeispiels.

### Zeichnung

In der Zeichnung ist ein Ausführungsbeispiel des erfindungsgemäßen Markierungsgerätes dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls offenbart anzusehen sind.

Es zeigen:
- Figur 1: eine Aufsicht, auf ein Ausführungsbeispiel eines erfindungsgemäßen Markierungsgerätes in einer schematisierten Darstellung,
- Figur 2: einen Querschnitt durch die Darstellung des Markierungsgerätes gemäß Figur 1.

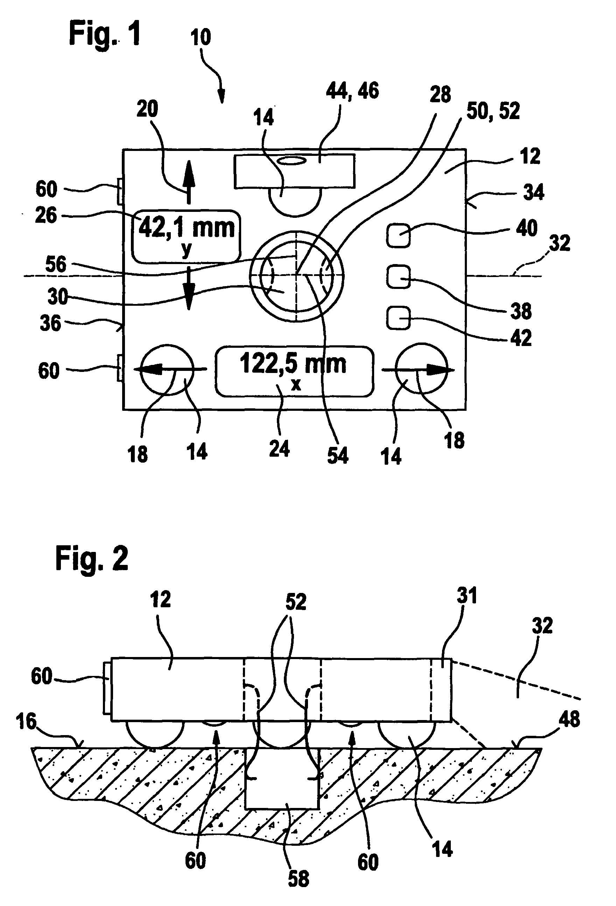

Figur 1 zeigt ein Ausführungsbeispiel des erfindungsgemäßen Markierungsgerätes 10. Das Markierungsgerät gemäß Figur 1 besitzt ein im Wesentlichen quaderförmiges Gehäuse 12, welches über abrollbare Kugeln 14, die aus der Unterseite des Gehäuses herausragen (siehe Figur 2) über eine Referenzfläche 16 verfahren werden kann. Im Beispiel der Figur 1 ist diese Referenzfläche parallel zur Oberfläche der Zeichnungsseite.

In alternativen Ausführungsformen des erfindungsgemäßen Messgerätes kann sowohl die Gehäuseform als auch die Anzahl und Anordnungen der Kugeln 14 von dem in Figur 1 gezeigten Ausführungsbeispiel abweichen.

Im Gehäuse 12 des Markierungsgerätes 10 befindet sich eine Steuer und Auswerteeinheit mit einem Wegnehmersystem 13, die die Bewegung mindestens-einer Kugel 14 in zwei orthogonalen Richtungen, die durch die Pfeile 18 beziehungsweise 20 angedeutet sind, detektieren und eine vom Markierungsgerät 10 in die jeweilige Richtung zurückgelegte Strecke bestimmen. Die vom Markierungsgerät in die beiden orthogonalen Richtungen 18 beziehungsweise 20 zurückgelegten Strecken relativ zu einem Referenzpunkt, dem die Koordinaten x = 0 und y = 0 zugewiesen werden können, werden im erfindungsgemäßen Ortungsgerät über eine Ausgabeeinheit 22, die im Ausführungsbeispiel der Figur 1 zwei optische Displays 24 beziehungsweise 26 umfasst, dem Nutzer mitgeteilt.

Als Bezugspunkt für die vorgebbare Referenzmarkierung ist geräteseitig der Mittelpunkt 28 einer zylinderförmigen, das Gehäuse 12 des Markierungsgerätes 10 durchdringenden Öffnung 30 definiert, welche ein Markierungseinrichtung 47 zum Positionieren einer Markierung auf einer Referenzfläche bildet. Diese Markierungseinrichtung 47 kann beispielsweise aber auch als integrierter Stempel oder integrierter Tintenspritzer, der auf mechanischem, elektronischem, thermischem, pneumatischem oder piezokeramischem Wege, analog einem Tintenstrahldrucker eine entsprechende Markierung in Form eines Tintenkleckses auf die gewünschte Position aufbringen kann, ausgebildet sein.

Das Markierungsgerät 10 verfügt über optische Signalmittel zur Erzeugung einer Richtungsinformation, die im Ausfiihrungsbeispiel der Figur 1 in Form einer Mehrzahl von aus dem Gerät austretenden Laserlinien realisiert sind, die insbesondere auf die Oberfläche der Referenzfläche 16 projiziert werden. Die Laserlinien 32 können beispielsweise an zwei gegenüberliegenden Seiten 34 beziehungsweise 36 des Gehäuses 12 des Markierungsgerätes 10 austreten oder in anderen Ausführungsformen des erfindungsgemäßen Markierungsgerätes beispielsweise auch an allen vier Seiten des Gehäuses 12 austreten. Entsprechende Laserlinien können ebenfalls auch durch die Öffnung 30 des Messgerätes 10 derart geführt werden, dass sie sich im Mittelpunkt 28 der Öffnung 30 schneiden. Auf diese Weise wird einem Anwender des Markierungsgerätes 10 der Nullpunkt einer Streckenmessung eindeutig visualisiert, so dass er das Messgerät exakt auf einer vorgebbaren, von ihm gewünschten ersten Position einer Referenzfläche anordnen, d.h., lokalisieren kann.

Über entsprechende Bedienelemente 38 können die Laserlinien 32 einzeln oder auch insgesamt zugeschaltet beziehungsweise abgeschaltet werden. Neben dem Bedienelement 38 für die optischen Signalmittel 32 weist das Gerät zumindest einen Ein- bzw. Ausschalter 40 sowie eine Reset-Taste 42 auf, mit dem die optischen Anzeigen 24 beziehungsweise 26 zurück auf einen Null- bzw. Startwert gesetzt werden können. Wichtig bei einem solchen Reset ist die genaue horizontale Ausrichtung des Markierungsgerätes 10, damit der Referenzpunkt exakt definiert ist. Insbesondere Drehungen des Gerätes um die eigene Achse würden ansonsten das Messergebnis verfälschen. Daher sollte das Messgerät bei einem Reset mit Hilfe einer Nivelliereinheit 44, die in Figur 1 lediglich symbolisch als Libelle einer Wasserwaage 46 dargestellt ist, ausgerichtet werden. Insbesondere hat eine derartige Ausrichtung in den zwei orthogonalen Richtungen, die durch die Pfadpfeile 18 beziehungsweise 20 angedeutet sind, zu erfolgen. Diese Ausrichtung kann manuell, d.h., mit dem Auge des Anwenders, beispielsweise mit Hilfe zweier orthogonal angeordneter Libellen oder aber auch elektronisch, über eine automatische Erkennung der Ausrichtung mittels eines optischen beziehungsweise elektronischen Auslesesystems für die Libellen oder einem entsprechend ausgebildeten Neigungssensor geschehen.

Nach dem Ausrichten des Messgerätes 10 kann das Gerät mittels der Kugeln 14 handgehalten und frei über die Referenzfläche 16, beispielsweise eine Wand, bewegt werden, wobei jeweils die x- und y-Komponente der vom Referenzpunkt (X=0,Y=0) zurückgelegten Strecke im Display 24 beziehungsweise 26 angezeigt werden. Durch die Verwendung von multiplen Wegsensoren, d.h., durch das Abtasten von zwei oder mehreren Kugeln, kann eine intelligente Elektronik der Steuer- und Auswerteeinheit des Markierungsgerätes, beziehungsweise eine entsprechende Software, Fehler bei einem oder mehreren der Wegsensoren erkennen und korrigieren, so dass beispielsweise das Verfahren des Gerätes über eine Kante oder das Verkippen beziehungsweise das Verdrehen des Gerätes um die eigene Achse korrigiert werden können. Das Messgerät 10 kann nunmehr an die gewünschte Stelle auf der Referenzfläche 16 verfahren werden, an der über gerätintegrierte Marlderungsmittel beziehungsweise durch die Öffnung 30 des Messgerätes hierdurch eine entsprechende Markierung an der ausgewählten Position aufgebracht werden kann.

Möchte der Anwender beispielsweise ein zweites Bohrloch beziehungsweise eine zweite Markierung in gleicher Höhe (y=0) zu einer ersten Referenzmarkierung (x=0, y=0) in einem definierten Abstand x = L auffinden, so kann in einer Ausführungsform des erfindungsgemäDen Marlaerungsgerätes vorgesehen sein, die Abweichungen des Markierungsgerätes in der y-Komponente 20, welche sich bei einem Verfahren des Messgerätes ergeben, nicht über ein entsprechendes Display 26 quantitativ anzuzeigen, sondern lediglich dem Anwender optisch beziehungsweise akustisch mitzuteilen, dass eine Abweichung in Y-Richtung vorliegt.

Bei Anwendungsfällen, bei denen es nicht auf den exakten Abstand zweier oder mehrerer Referenzpunkte, sondern lediglich auf deren Nivellierung, d.h., beispielsweise die gleiche Höhe ankommt, kann ein Laser, insbesondere ein Linienlaser 31 des Gerätes 10 zugeschaltet werden, der entweder in eine oder in mehrere Richtungen ein deutlich sichtbares, strichförmiges Liniensignal auf die Referenzfläche projiziert.

Figur 2 zeigt in einer vereinfachten Querschnittsdarstellung des erfindungsgemäßen Markierungsgerätes gemäß Figur 1 eine solche Projektion einer Laserlinie 32 auf die Oberfläche 48 der Referenzfläche 16. Ein nicht näher dargestellter Laser 31, im Gehäuse 12 des erfindungsgemäßen Markierungsgerätes 10 wirft ein flächig aufgeweitetes Lichtsignal 33 auf die Referenzfläche, 16, so dass sich auf dieser eine deutlich sichtbare Linie 32 abzeichnet. Mit Hilfe der im Gerät 10 vorhandenen Nivelliereinheit 44 ergibt sich somit ein einfacher Nivellierlaser, mit dessen Hilfe entsprechende Markierungen auf einer Oberfläche angezeichnet werden können.

In alternativen Ausführungsformen des erfindungsgemäßen Markierungsgerätes, kann vorgesehen sein, den Laser in der Art eines Pendellasers auszubilden, so dass die durch den Laser erzeugte Laserlinie 32 immer waagrecht verläuft.

Ebenfalls in Figur 2 schematisch angedeutet sind Mittel 50 zur Befestigung des Markierungsgerätes, beispielsweise in einem Bohrloch 58. Die in Figur 2 in Art einer Kralle 52 ausgebildeten Befestigungsmittel 50 können beispielsweise auch als Stift, Klammer, Klemme, Nagel, Schraube oder auch Klebstoff ausgebildet sein. In vorteilhafter Weise sind diese Mittel 50 derart in oder am Gehäuse 12 des Markierungsgerätes 10 ausgebildet, dass sich eine Zentrierung des Mittelpunktes 28 der Öffnung 30 des Messgerätes in der Bohrung 58, in die die Befestigungsmittel 50 eingeführt werden, ergibt. Mit Hilfe dieser Befestigungsmittel 50 lässt sich das erfindungsgemäße Markierungsgerät 10 fest in einer vorgebbaren, ersten Position einer Referenzfläche fixieren. Eine alternative Weise zur Anordnung des Markierungsgerätes 10 an einer vorgebbaren, ersten Position der Referenzfläche 16 besteht darin, das Gerät lediglich mit seinem Mittelpunkt 28, wie er beispielsweise durch zwei Laserlinien 54 beziehungsweise 56 definiert und für den Anwender sichtbar gemacht ist, exakt über die gewünschte erste Position der Referenzfläche 16 zu fahren, ohne dass das Gerät 10 mit Hilfsmitteln 50 zur Befestigung an dieser Stelle fixiert wird. Mit Hilfe der Reset-Taste 42 kann dann an dieser ersten Referenzstelle die Ausgabeeinheit 22, beziehungsweise die optischen Displays 24 beziehungsweise 26 des Markierungsgerätes auf Null oder einen gewünschten Startwert gesetzt werden. Ausgehend von dieser ersten Referenzmarkierung kann dann das Messgerät frei über die Referenzfläche 16 auf die gewünschte zweite Position verfahren werden. An dieser zweiten Position können nun die bereits genannten Markierungsmittel 47 eine Markierung auf die Oberfläche der Referenzfläche 16 aufbringen.

Das erfindungsgemäße Markierungsgerät 10 kann darüber hinaus auch genutzt werden, eine erste Markierung zu positionieren, die beispielsweise einen definierten Abstand von einer Ecke beziehungsweise einer Kante einer Wand oder dergleichen aufweisen soll. Dazu wird das Gerät 10 mit einer seiner Gehäusekanten an die Ecke oder Kante der Wand angelegt. In einer vorteilhaften Ausführungsform können in den Gehäusekanten dazu Sensoren 60 angebracht sein, die einen Kontakt mit einem Ecken- oder Kantenelement detektieren und den Referenzpunkt der Streckenmessung vom Mittelpunkt 28 der Öffnung 30 im Gehäuse 12 des Markierungsgerätes in die Ebene der an der Kante anliegenden Seite, beispielsweise der Seite 36 des Gehäuses 12 in Figur 1 bzw. 2 verlegen und diese Verschiebung des Mess-Nullpunktes automatisch in der Ausgabeeinheit des Markierungsgerätes darstellen.

In analoger Weise können die Kugeln 14 des Wegnehmersystems 13 auch als Kontaktschalter ausgebildet sein, die detektieren, ob das Markierungsgerät 10 auf einer Referenzfläche 16 aufgesetzt ist und für diesen Fall automatisch das Gerät einschalten.

Alternativerweise kann dies auch über optische Sensoren 60 erfolgen, die als Wandkontaktsensoten ausgebildet sind und die positive Rückmeldung des Wandkontaktes an die Steuer- und Auswerteeinheit des erfindungsgemäßen Markierungsgerätes 10 ermöglichen.

Derartige optische Sensoren können ebenfalls auch im Wegnehmersystem 13 verwendet werden, um die vom Markierungsgerät 10 zurückgelegte Strecke zu detektieren und zu quantifizieren. Hierbei können, wie in Figur 2 gezeigt, auch Kugeln als Verfahrhilfe verwendet werden, es können jedoch auch andere Hilfsmittel, wie beispielsweise Filzgleiter oder lediglich nur der der Referenzfläche zugewandte Gehäuseboden des Gerätes zur Verwendung kommen.

In vorteilhafter Weise ist die gesamte Steuer- und Auswerteelektronik sowie die Energieversorgung des Marlderungsgerätes 10 im Gehäuse 12 des Gerätes integriert, so dass ein autonomes, frei bewegbares Markierungsgerät dem Anwender zur Verfügung steht.

Das erfindungsgemäße Gerät ist nicht auf die in den Figuren dargestellte Ausführungsform beschränkt.

## Patentansprüche

1. Markierungsgerät, insbesondere ein handgehaltenes Markierungswerkzeug zur Positionierung von Markierungen auf Wänden, Decken und Böden, mit ersten Mitteln (50,52,54,56), die es ermöglichen das Gerät (10) an einer vorgebbaren, ersten Position einer Referenzfläche (16) anzuordnen, sowie mit zweiten Mitteln (44,46) zur Nivellierung des Gerätes (10) relativ zu der Referenzfläche (16), sowie mit einem Wegnehmersystem (13) zur Bestimmung einer in Bezug auf die erste Position des Gerätes (10) von dem Gerät zurückgelegten Strecke, **dadurch** gekenntzeichnet dass das Wegnehmersystem (13) die Bewegung des Messgerätes (10) auf der Referenzfläche (16) in zwei orthogonalen Richtungen (18,20) detektiert.

2. Markierungsgerät nach Anspruch 1, **dadurch gekennzeichnet, dass** das Wegnehmersystem (13) ein mechanisches Messsystem ist.

3. Markierungsgerät nach Anspruch 1, **dadurch gekennzeichnet, dass** das Wegnehmersystem (13) ein opto - mechanisches Messsystem ist.

4. Markierungsgerät nach einem der vorhergehenden Ansprüche, **dadurch gekennzeichnet, dass** das Wegnehmersystem (13) über zumindest eine, über die Referenzfläche abrollbare Kugel (14) verfügt.

5. Markierungsgerät nach einem der vorhergehenden Ansprüche, **dadurch** gekenntzeichnet, dass das Gerät (10) über optische Signalmittel (31,32,54,56) zur Erzeugung mindestens einer Richtungsinformation verfügt.

6. Markierungsgerät nach Anspruch 5, **dadurch** gekenntzeichnet, dass die Vorrichtung über Mittel (44,46) verfügt, die es ermöglichen, die optischen Signalmittel (31,32,54,56) zur Erzeugung einer Richtungsinformation relativ zur Referenzfläche (16) zu nivellieren.

7. Markierungsgerät nach einem der vorhergehenden Ansprüche 5 oder 6, **dadurch gekennzeichnet, dass** die optischen Signalmittel (31,32,54,56) selbstnivellierend sind.

8. Markierungsgerät nach einem der Ansprüche 5 bis 7, **dadurch gekennzeichnet, dass** die optischen Signalmittel (31,32,54,56) zumindest einen Laser (31) umfassen.

9. Marläerungsgerät nach einem der vorhergehenden Ansprüche, **dadurch gekennzeichnet, dass** das Markierungsgerät (10) über Anzeigemittel (22;24,26) verfügt, die es gestatten, den Abstandswert des Gerätes (10) von einer ersten Position zumindest in einer der orthogonalen Richtungen (18,20) wiederzugeben.

10. Markierungsgerät nach einem der vorhergehenden Ansprüche, **dadurch gekennzeichnet, dass** das Gerät (10) über Markierungsmittel (30,47,54,56) verfügt, die es ermöglichen, eine zweite Position auf der Referenzfläche (16) zu markieren, die einem ermittelten Abstand zur vorgebbaren ersten Position entspricht.

## Claims

1. Marking appliance, in particular a hand-held marking tool for positioning markings on walls, ceilings and floors, having first means (50, 52, 54, 56) which enable the appliance (10) to be arranged at a prescribable, first position of a reference surface (16), and having second means (44, 46) for levelling the appliance (10) relative to the reference surface (16), and having a displacement sensor system (13) for determining a path covered by the appliance (10) with reference to the first position of the appliance, **characterized in that** the displacement sensor system (13) detects the movement of the marking appliance (10) on the reference surface (16) in two orthogonal directions (18, 20).

2. Marking appliance according to Claim 1, **characterized in that** the displacement sensor system (13) is a mechanical measuring system.

3. Marking appliance according to Claim 1, **characterized in that** the displacement sensor system (13) is an optomechanical measuring system.

4. Marking appliance according to one of the preceding claims, **characterized in that** the displacement sensor system (13) has at least one ball (14) which can roll over the reference surface.

5. Marking appliance according to one of the preceding claims, **characterized in that** the appliance (10) has optical signalling means (31, 32, 54, 56) for generating at least one item of directional information.

6. Marking appliance according to Claim 5, **characterized in that** the device has means (44, 46) which enable the optical signalling means (31, 32, 54, 56) for generating an item of directional information to be levelled relative to the reference surface (16).

7. Marking appliance according to either of the preceding Claims 5 and 6, **characterized in that** the optical signalling means (31, 32, 54, 56) are self levelling.

8. Marking appliance according to one of Claims 5 to 7, **characterized in that** the optical signalling means (31, 32, 54, 56) comprise at least one laser (31).

9. Marking appliance according to one of the preceding claims, **characterized in that** a marking appliance (10) has display means (22, 24, 26) which enable the distance value of the appliance (10) from a first position to be given at least in one of the orthogonal directions (18, 20).

10. Marking appliance according to one of the preceding claims, **characterized in that** the appliance (10) has marking means (31, 32, 54, 56) which enable a second position corresponding to a determined distance from the prescribable first position to be marked on the reference surface (16).

## Revendications

1. Appareil de marquage, en particulier outil de marquage manuel pour le positionnement de marquages sur des murs, des plafonds et des sols, comprenant des premiers moyens (50, 52, 54, 56) qui permettent de disposer l'appareil (10) dans une première position prédéfinissable d'une surface de référence (16), et des deuxièmes moyens (44, 46) pour niveler l'appareil (10) par rapport à la surface de référence (16), ainsi qu'un système de capteur de position (13) pour déterminer une distance parcourue par l'appareil par rapport à la première position de l'appareil (10), **caractérisé en ce que** le système de capteur de position (13) détecte le déplacement de l'appareil de marquage (10) sur la surface de référence (16) dans deux directions orthogonales (18, 20).

2. Appareil de marquage selon la revendication 1, **caractérisé en ce que** le système de capteur de position (13) est un système de mesure mécanique.

3. Appareil de marquage selon la revendication 1, **caractérisé en ce que** le système de capteur de position (13) est un système de mesure opto-mécanique.

4. Appareil de marquage selon l'une quelconque des revendications précédentes, **caractérisé en ce que** le système de capteur de position (13) dispose d'au moins une bielle (14) pouvant rouler sur la surface de référence.

5. Appareil de marquage selon l'une quelconque des revendications précédentes, **caractérisé en ce que** l'appareil (10) dispose de moyens de signaux optiques (31, 32, 54, 56) pour produire au moins une information de direction.

6. Appareil de marquage selon la revendication 5, **caractérisé en ce que** le dispositif dispose de moyens (44, 46) qui permettent de niveler les moyens de signaux optiques (31, 32, 54, 56) pour produire une information de direction par rapport à la surface de référence (16).

7. Appareil de marquage selon l'une quelconque des revendications précédentes 5 ou 6, **caractérisé en ce que** les moyens de signaux optiques (31, 32, 54, 56) sont auto-nivelants.

8. Appareil de marquage selon l'une quelconque des revendications 5 à 7, **caractérisé en ce que** les moyens de signaux optiques (31, 32, 54, 56) comprennent au moins un laser (31).

9. Appareil de marquage selon l'une quelconque des revendications précédentes, **caractérisé en ce que** l'appareil de marquage (10) dispose de moyens d'affichage (22, 24, 26) qui permettent de restituer la valeur de distance de l'appareil (10) depuis une première position au moins dans l'une des directions orthogonales (18, 20).

10. Appareil de marquage selon l'une quelconque des revendications précédentes, **caractérisé en ce que** l'appareil (10) dispose de moyens de marquage (30, 47, 54, 56) qui permettent de marquer une deuxième position sur la surface de référence (16), laquelle correspond à une distance déterminée par rapport à la première position prédéfinissable.
